# EUROPEAN PATENT APPLICATION

(11) **EP 4 592 804 A1**
(43) Date of publication of application: **30.07.2025**
(21) Application number: 23867234.9
(22) Date of filing: 29.08.2023
(51) Int. Cl.: G06F 3/0481

(54) **COMMENT INFORMATION PUBLISHING METHOD AND APPARATUS, ELECTRONIC DEVICE, AND STORAGE MEDIUM**

(30) Priority: 23.09.2022 CN 202211167173
(71) Applicant: Beijing Zitiao Network Technology Co., Ltd., Beijing 100190 (CN)
(72) Inventor: ZHENG, Lingling, Beijing 100028 (CN)
(74) Representative: Dentons UK and Middle East LLP
(86) International application number: PCT/CN2023/115417
(87) International publication number: WO 2024/060943

(57) **Abstract**

A comment information publishing method and apparatus, an electronic device, and a storage medium. The method comprises: displaying, in a media content display page, target media content and a comment control corresponding to the target media content, wherein the comment control is configured to trigger and display published comment information for the target media content (S101); in response to a first trigger operation on the comment control, displaying a first comment panel and a target interaction object for the target media content, wherein the first comment panel includes a first comment input area, and the target interaction object is configured to input first comment information for the target media content in the first comment input area (S102); and in response to a comment publishing operation, publishing the first comment information in the first comment input area (S103).

## Description

### CROSS REFERENCE TO RELATED APPLICATIONS

The present disclosure claims a priority right to the Chinese patent application No. 202211167173.3 filed with the Chinese Patent Office on September 23, 2022, the entire disclosure of which is hereby incorporated by reference in its entirety.

### FIELD

Embodiments of the present disclosure relate to the field of computer technology, for example to a comment information publishing method and apparatus, an electronic device, and a storage medium.

### BACKGROUND

In some applications, when viewing a video, a user may instruct the applications to display a comment panel for the video by triggering a comment control and calling up a virtual keyboard by triggering a comment entry box in the comment panel to enter comment information which the user wants to publish by the virtual keyboard.

However, in the related art, the process of the user publishing comments is cumbersome, which does not help the user to comment quickly.

### SUMMARY

Embodiments of the present disclosure provide a comment information publishing method and apparatus, an electronic device, and a storage medium, to simplify the operations required for users to publish comments.

In a first aspect, embodiments of the present disclosure provide a comment information publishing method, comprising: displaying, in a media content display page, target media content and a comment control corresponding to the target media content, wherein the comment control is configured to trigger and display published comment information for the target media content; in response to a first trigger operation on the comment control, displaying a first comment panel and a target interaction object for the target media content, wherein the first comment panel includes a first comment input area, and the target interaction object is configured to input first comment information for the target media content in the first comment input area; and in response to a comment publishing operation, publishing the first comment information in the first comment input area.

In a second aspect, embodiments of the present disclosure provide a comment information publishing apparatus, comprising: a content displaying module configured to display, in a media content display page, target media content and a comment control corresponding to the target media content, wherein the comment control is configured to trigger and display published comment information for the target media content; a first panel displaying module configured to, in response to a first trigger operation on the comment control, display a first comment panel and a target interaction object for the target media content, wherein the first comment panel includes a first comment input area, and the target interaction object is configured to input first comment information for the target media content in the first comment input area; a comment publishing module configured to, in response to a comment publishing operation, publish the first comment information in the first comment input area.

In a third aspect, embodiments of the present disclosure further provide an electronic device, comprising: at least one processor; a memory configured to store at least one program that, when executed by the at least one processor, causes the at least one processor to implement the comment information publishing method as described in embodiments of the present disclosure.

In a fourth aspect, embodiments of the present disclosure further provide a computer-readable storage medium having stored thereon a computer program which, when executed by a processor, implements the comment information publishing method as described in embodiments of the present disclosure.

### BRIEF DESCRIPTION OF THE DRAWINGS

FIG. 1 is a flow chart of a comment information publishing method according to an embodiment of the present disclosure;
FIG. 2 is a schematic diagram displaying a comment control according to an embodiment of the present disclosure;
FIG. 3 is a schematic diagram displaying a first comment panel according to an embodiment of the present disclosure;
FIG. 4 is a flow chart of another comment information publishing method according to an embodiment of the present disclosure;
FIG. 5 is a schematic diagram displaying another first comment panel according to an embodiment of the present disclosure;
FIG. 6 is a schematic diagram displaying a second comment panel according to an embodiment of the present disclosure;
FIG. 7 is a block diagram of a comment information publishing apparatus according to an embodiment of the present disclosure;
FIG. 8 is a block diagram of an electronic device according to an embodiment of the present disclosure.

### DETAILED DESCRIPTION OF EMBODIMENTS

Embodiments of the present disclosure will be described below with reference to the accompanying drawings. However, it is to be understood that the present disclosure may be embodied in various forms and should not be construed as limited to the embodiments set forth herein, rather, these embodiments are provided to enable more thorough and complete understanding of the present disclosure.

It should be appreciated that steps described in a method embodiment of the present disclosure may be performed in a different order and/or in parallel. In addition, the method embodiment may include additional steps and/or omit performing the steps shown.

As used herein, the term "comprises" and variations thereof are open-ended terms, i.e., mean "comprise, but not limited to". The term "based on" means "based, at least in part, on". The term "one embodiment" means "at least one embodiment"; the term "another embodiment" means "at least one further embodiment"; the term "some embodiments" means "at least some embodiments". Relevant definitions of other terms will be given in the following depictions herein.

It needs to be appreciated that concepts such as "first" and "second" mentioned in the present disclosure are only used to distinguish between different devices, modules, or units and are not intended to limit the order of functions performed by these devices, modules or units or interdependence thereof.

It needs to be appreciated that the modifiers "one" or "more" mentioned in the present disclosure are intended to be illustrative and not restrictive, and those skilled in the art will understand that such modifiers should be understood as "one or more" unless the context clearly indicates otherwise.

The names of messages or information interacted between devices in embodiments of the present disclosure are for illustrative purposes only and are not intended to limit the scope of such messages or information.

It may be appreciated that prior to using the technical solutions disclosed in various embodiments of the present disclosure, a user should be notified of the type, scope of use, use scenario, etc. of personal information involved in the present disclosure and authorization be obtained from the user in an appropriate manner according to relevant laws and regulations.

For example, in response to reception of the user's active request, prompt information is sent to the user to explicitly prompt the user that an operation he requests to perform needs to obtain and use the user's personal information. Accordingly, the user may autonomously select, according to the prompt information, whether to provide the personal information to software or hardware such as an electronic device, an application, a server or a storage medium, which executes the operation of the technical solution of the present disclosure.

As an alternative but non-limiting implementation, in response to reception of the user's active request, the prompt message may be sent to the user, for example, in the form of a pop-up window in which the prompt message may be presented in a text. In addition, the pop-up window may further carry a selection control for the user to select "agree" or "disagree" to provide the personal information to the electronic device.

It is to be understood that the above-described processes of notifying and obtaining the user's authorization are merely illustrative and not be construed as limiting the implementations of the present disclosure, and that other ways of satisfying relevant laws and regulations may also be applied to the implementations of the present disclosure.

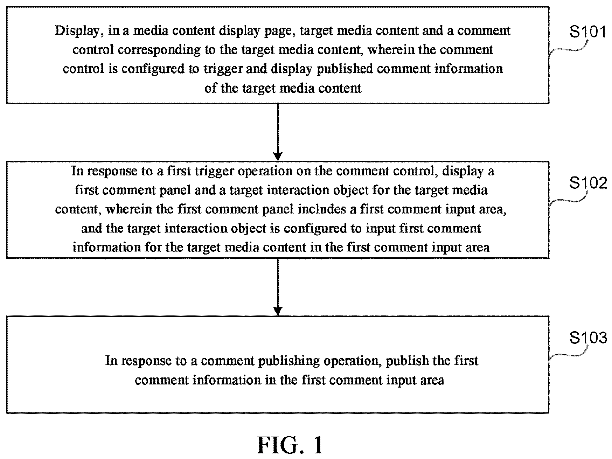

FIG. 1 is a flow chart of a method for publishing comment information according to an embodiment of the present disclosure. The method may be performed by a comment information publishing device, wherein the device may be implemented by software and/or hardware, and configured in an electronic device, e.g., configured in a mobile phone or a tablet computer. The comment information publishing method according to the embodiment of the present disclosure is applicable to a scenario in which comment information for media content is rapidly published while the media content is being viewed. As shown in FIG. 1, the comment information publishing method according to the embodiment may comprise the following steps.

S101: displaying, in a media content display page, target media content and a comment control corresponding to the target media content, wherein the comment control is configured to trigger and display published comment information for the target media content.

The media content display page may be a page for displaying media content, and the media content may include, but is not limited to video content, graphic and text content and the like. When the media content includes video content, the media content display page may be, for example, a video playing page. The target media content may be media content currently displayed in the media content display page, such as video content currently played in the media content display page, etc. The published comment information may be comment information for the target media content, such as comment information for the target media content published by the current user and/or other users viewing the target media content. The comment control is a control which may be set to trigger the display of the published comment information for the target media content, namely, the current user may trigger the comment control in a certain triggering manner to instruct the current application to display the published comment information for the target media content.

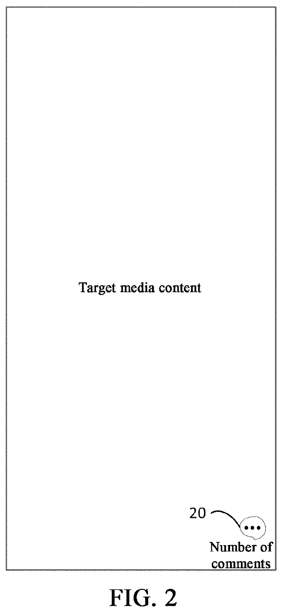

As shown in FIG. 2, when a piece of media content (e.g., a piece of target media content) is displayed in the media content display page, a comment control 20 for the media content may be displayed in the media content display page to help the user to view the published comment information about the media content or comment on the target media content by triggering the comment control 20.

S102: in response to a first trigger operation on the comment control, displaying a first comment panel and a target interaction object for the target media content, wherein the first comment panel includes a first comment input area, and the target interaction object is configured to input first comment information for the target media content in the first comment input area.

The first trigger operation may be a trigger operation for instructing to display the first comment panel and the target interaction object for the target media content, such as a long-push operation acting on the comment control, etc. The first comment panel may be a panel configured for the user to comment on the target media content, i.e., a comment input panel. The target interaction object may be an input interaction object for the user to input comment information, such as a virtual keyboard and/or one or more emoji identifiers for inputting corresponding emojis, etc. The first comment input area may be an area included in the first comment panel for the user to input the comment information. The first comment information may be comment information input in the first comment input area, such as comment information that the current user intends to publish through the first comment panel.

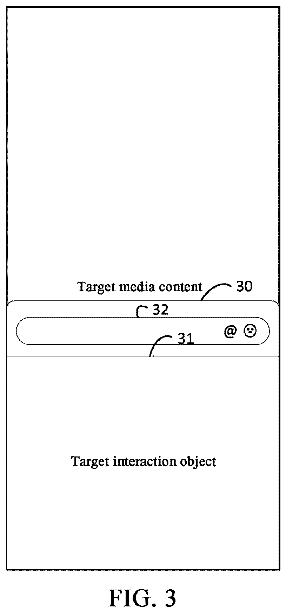

Exemplarily, when the first trigger operation on the comment control 20 for the target media content (as shown in FIG. 2) is received, for example when it is detected that the current user long-pushes the comment control 20 for the target media content, a first comment panel 30 and a target interaction object 31 of the target media content may be displayed, for example, the first comment panel 30 of the target media content may be displayed, a first comment input area 32 be displayed in the first comment panel 30, and a virtual keyboard be displayed, as shown in FIG. 3. Thus, the user may input comment information he wants to comment in the first comment input area 32 through the target interaction object 31 to publish the comment information.

In the present embodiment, the user may focus on the comment input area to execute the operation of inputting the comment information about a currently viewed media content by triggering the comment control of the media content, namely, the user may comment on the media content by only one operation, without need to trigger an input box in the comment panel to instruct the current application to display a virtual keyboard after triggering the comment control d, and also without need to respectively set, in the media content display page, different controls configured to display the comment content and configured to input the comment content, respectively, which can simplify an operation needed by the user to comment on the media content, realize quick comment on the media content, improve the simplicity of the media content display page, reduce the occlusion caused to the media content picture, and thereby improve the user's experience.

S103: in response to a comment publishing operation, publishing the first comment information in the first comment input area.

The comment publishing operation may be a trigger operation for instructing to publish the first comment information input in the first comment input area, for example a trigger operation of triggering a publishing control in the first comment panel and/or triggering a completing control in the virtual keyboard, etc.

When the current user's comment publishing operation is received, the first comment information currently input in the first comment input area may be published, that is, the first comment information input by the current user in the first comment input area may be published.

It may be appreciated that after the first comment information is published, the display of the first comment panel and the target interaction object may be maintained and/or the display of the first comment panel and the target interaction object may be cancelled, which may be set as needed. After being published successfully, the first comment information becomes a piece of published comment information for the target media content, namely, the current user may view the first comment information in a second comment panel.

In some embodiments, target published comment information for the target media content is also displayed in the first comment panel, or a comment display control is also displayed in the first comment panel, the comment display control being configured to trigger additional display of the target published comment information for the target media content in the first comment panel.

In the above embodiments, in addition to directly commenting on the target media content via the first comment panel, the current user may also view the published comment information for the target media content via the first comment panel, e.g., view the target published comment information for the target media content. In this way, the function of the first comment panel may be further enriched, so that the user may view the published comment information for the target media content without switching to the second comment panel, so as to meet the user's diversified demands.

The target published comment information may be published comment information meeting a preset condition, such as published comment information with a popularity greater than a preset popularity threshold, published comment information with a number of sub-comments/number of likes greater than a preset number threshold, or published comment information published within a recent period of time, etc.

It is feasible to display the first comment panel of the target media content, and display in the first comment panel the first comment input area and at least one piece of target published comment information for the target media content, when the first comment panel is initially displayed, i.e., when a certain number (e.g., less than or equal to a preset number) of target published comment information is displayed in the first comment panel, e.g., when the first trigger operation on the comment control is received.

In addition, it is also feasible not to display the target published comment information in the first comment panel when the first comment panel is initially displayed. For example, it is feasible to display the first comment panel of the target media content and display the first comment input area and the comment display control in the first comment panel when the first trigger operation on the comment control is received. Thus, when it is detected that the current user triggers the comment display control, the first comment input area in the first comment panel may remain displayed, and a number of target published comment information for the target media content may be additionally displayed in the first comment panel. As appreciated, when it is detected that the current user triggers the comment display control, the display of the target interaction object may be maintained or cancelled, which may be set as needed.

In the above embodiment, when one or more pieces of target published comment information are displayed in the first comment panel, the current user may reply to the target published comment information displayed in the first comment panel through the first comment panel in addition to viewing the target published comment information displayed in the first comment panel. For example, the current user may select one or more pieces of target published comment information displayed in the first comment panel and enter comment information replying thereto in the first comment input area. Thus, when there exists the target published comment information selected by the current user, if a comment publishing operation is received, the first comment information input in the first comment input area may be published as sub-comment information of the target published comment information selected by the user.

At this time, optionally, the publishing the first comment information input in the first comment input area comprises: if the target published comment information in a selected state exists, publishing the first comment information by taking the first comment information input in the first comment input area as sub-comment information of the target published comment information, wherein the target published comment information is the published comment information in the selected state.

For example, when only one piece of target published comment information in the selected state exists in the first comment panel, the first comment information input in the first comment input area may be published as sub-comment information about the one piece of target published comment information in the selected state, when there exist a plurality of pieces of target published comment information in the selected state in the first comment panel, the first comment information input in the first comment input area may be respectively published as sub-comment information of each piece of target published comment information in the selected state, for example, the first comment information may be respectively published multiple times so as to publish the first comment information as sub-comment information of different target published comment information selected by the current user.

If there is no target published comment information in the selected state, i.e., if the current user does not select any target published comment information displayed in the first comment panel, the first comment information input in the first comment input area may be published as an independent piece of comment information for the target media content.

It may be appreciated that when target published comment information is displayed in the first comment panel, the current user may switch the target published comment information displayed in the first comment panel by performing a comment information switching operation, e.g., by performing a corresponding slide operation or by triggering a comment information switch control displayed in the first comment panel, etc. In this way, the current application may switch the target published comment information displayed in the first comment panel for the current user to view or reply upon receiving the current user's comment information switching operation.

The comment information publishing method according to the present embodiment comprises: displaying, in a media content display page, target media content and a comment control corresponding to the target media content, wherein the comment control is configured to trigger and display published comment information for the target media content; in response to a first trigger operation on the comment control, displaying a first comment panel and a target interaction object for the target media content, wherein the first comment panel includes a first comment input area, and the target interaction object is configured to input first comment information for the target media content in the first comment input area; and in response to a comment publishing operation, publishing the first comment information in the first comment input area. According to the above technical solution in the present embodiment, when the first trigger operation on the comment control is received, the first comment panel and target interaction object are displayed so that the user may comment on the media content only by one trigger operation. The present embodiment can simplify an operation needed by the user to comment on the media content, improve the simplicity of the media content display page, and improve the user's experience.

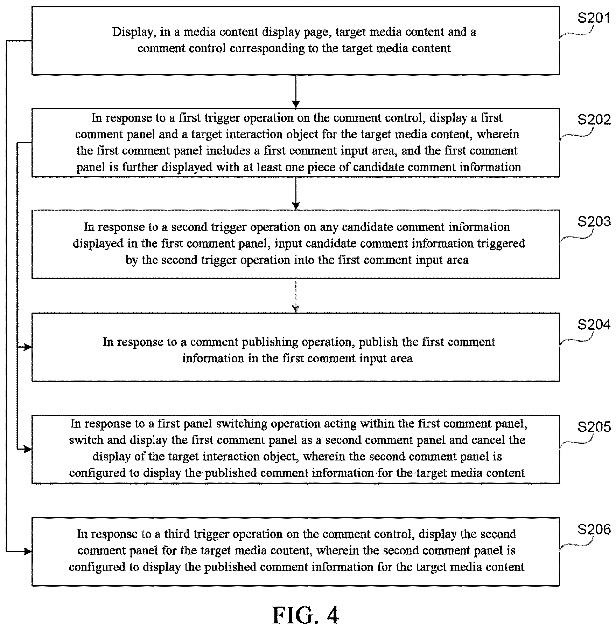

FIG. 4 is a flow chart of another comment information publishing method according to an embodiment of the present disclosure. The solution in the present embodiment may be combined with one or more optional solutions in the above embodiment. Optionally, the first comment panel is further displayed with at least one piece of candidate comment information, and the comment information publishing method according to the present embodiment further comprises: in response to a second trigger operation on any candidate comment information displayed in the first comment panel, inputting candidate comment information triggered by the second trigger operation into the first comment input area.

Optionally, the comment information publishing method according to the present embodiment further comprises: in response to a first panel switching operation acting within the first comment panel, switching the display of the first comment panel to a second comment panel and cancelling the display of the target interaction object, wherein the second comment panel is configured to display the published comment information for the target media content.

Optionally, the comment information publishing method according to the present embodiment further comprises: in response to a third trigger operation on the comment control, displaying the second comment panel for the target media content, wherein the second comment panel is configured to display the published comment information for the target media content.

As shown in FIG. 4, the comment information publishing method according to the present embodiment may comprise the following steps.

S201: displaying, in a media content display page, target media content and a comment control corresponding to the target media content, and performing S202 or S206, wherein the comment control is configured to trigger the display of published comment information for the target media content.

S202: in response to a first trigger operation on the comment control, displaying a first comment panel and a target interaction object for the target media content, and performing S203, S204 or S205, wherein the first comment panel comprises a first comment input area, at least one piece of candidate comment information is displayed in the first comment panel, and the target interaction object is configured to input the first comment information for the target media content in the first comment input area.

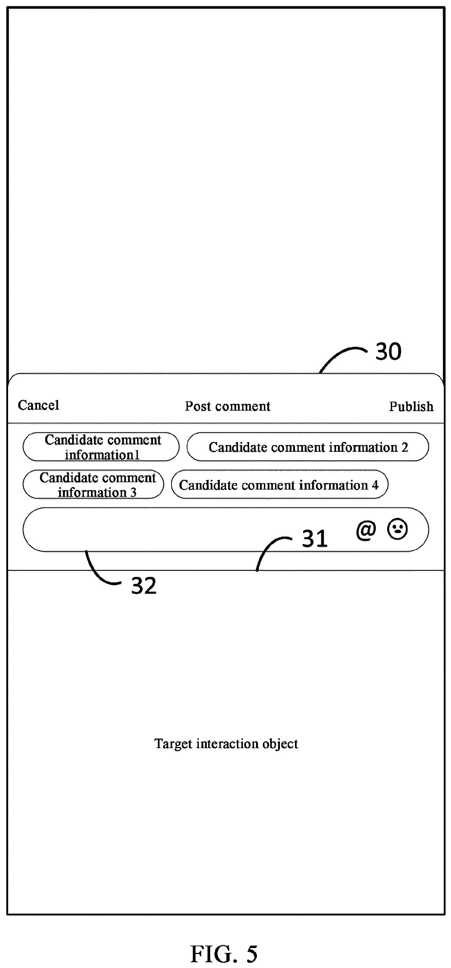

In the present embodiment, as shown in FIG. 5, when the first comment panel is displayed, one or more pieces of candidate comment information may be displayed in the first comment panel so that the user may quickly input comment information into the first comment input area by triggering the candidate comment information.

The candidate comment information may be pre-set comment information whose content is triggered and input by the user into the first comment input area. The candidate comment information for example may be pre-set by a developer, or determined according to a comment popularity with which multiple types of comment information in the current application are used to comment on the media content and/or a comment popularity with which multiple types of comment information in the target media content are used to comment on the target media content, etc. As may be appreciated, when the candidate comment information is determined according to the comment popularity with which multiple types of comment information in the current application are used to comment on the media content and/or a comment popularity with which multiple types of comment information in the target media content are used to comment on the target media content, the popularity is determined for comment information that has been published by the relevant user

S203: in response to a second trigger operation on any candidate comment information displayed in the first comment panel, inputting candidate comment information triggered by the second trigger operation into the first comment input area.

The second trigger operation may be an operation of triggering a piece of candidate comment information displayed in the first comment panel.

When the second trigger operation is received, i.e., when it is detected that the current user triggers a piece of candidate comment information displayed in the first comment panel, the candidate comment information may be input into the first comment input area, i.e., the information content of the candidate comment information is input into the first comment input area.

It may be appreciated that the current user may input first comment information he desires to publish into first comment input area only through the target interaction object, or input the first comment information he desires to publish into first comment input area only by triggering the candidate comment information; or input the first comment information he desires to publish into first comment input area based on the target interaction object and by triggering the candidate comment information simultaneously. In addition, after the information content of the candidate comment information is input into the first comment input area by triggering the candidate comment information, the current user may also edit the information content input into the first comment input area through the target interaction object according to needs.

S204: in response to a comment publishing operation, publishing the first comment information in the first comment input area.

S205: in response to a first panel switching operation acting within the first comment panel, switching the display of the first comment panel to a second comment panel and cancelling the display of the target interaction object, wherein the second comment panel is configured to display the published comment information for the target media content.

The first panel switching operation may be a trigger operation for instructing to switch the display of the first comment panel to the second comment panel, for example, a trigger operation for triggering a panel switching control displayed in the first comment panel. The second comment panel may be a comment display panel for the target media content, i.e., a comment panel that may be used to display pieces of published comment information (including but not limited to the target published comment information) about the target media content.

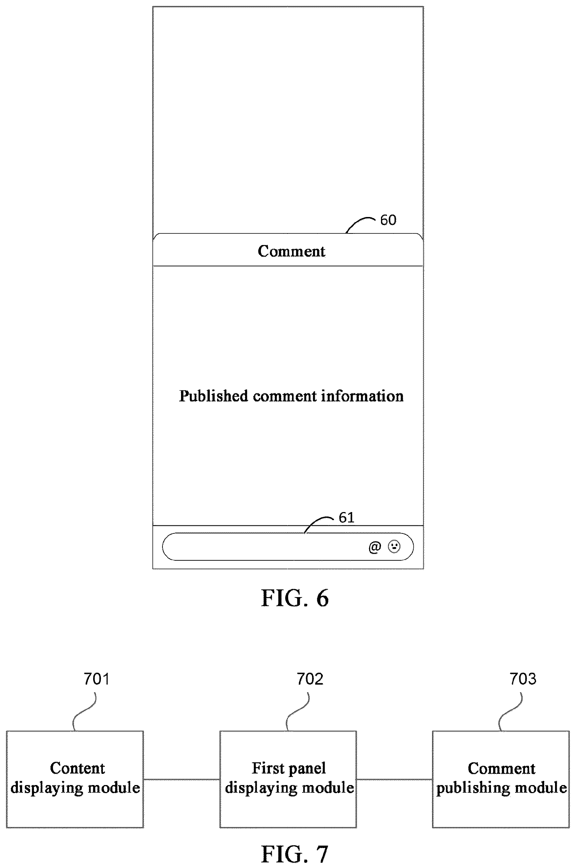

Exemplarily, upon the first panel switching operation is received, the display of the first comment panel 30 may be switched to the second comment panel 60 for the target media content, and the display of the target interaction object 31 may be cancelled. Exemplarily, the display of the first comment panel 30 and the target interaction object 31 of the target media content may be cancelled, the second comment panel 60 of the target media content may be displayed, and published comment information for the target media content is displayed in the second comment panel 60 for viewing by the user, as shown in FIG. 6.

Thus, the user may switch to the second comment panel to view the comment information for the target media content through a one-step operation, without need to first close the first comment panel of the target media content through a pre-set trigger operation, and then instruct the current application to display the second comment panel of the target media content through another trigger operation (such as a third trigger operation), which can simplify the operation needed by the user to switch from commenting on the target media content to viewing the comment information for the target media content.

S206: displaying a second comment panel for the target media content in response to a third trigger operation on the comment control, wherein the second comment panel is configured to display the published comment information for the target media content.

The third trigger operation may be a trigger operation for instructing to display the second comment panel of the target media content, and may be a different trigger operation from the first trigger operation, for example, the first trigger operation may be a long-push operation acting on the comment control, whereas the third trigger operation may be a click operation acting on the comment control, etc.

When the third trigger operation on the comment control 20 for the target media content is received, e.g., when it is detected that the current user clicks on the comment control 20 for the target media content, the second comment panel 60 for the target media content may be displayed and the published comment information for the target media content may be displayed in the second comment panel 60 for viewing by the current user, as shown in FIG. 6.

In the present embodiment, with regard to the case where the second comment panel is currently displayed, when there is a need to comment on the target media content, the user may switch the display of the second comment panel to the first comment panel, and comment on the target media content in the first comment panel, the target media content may also be commented directly in the second comment panel. Simultaneously, optionally, the comment information publishing method according to the present embodiment further comprises: in response to a second panel switching operation acting within the second comment panel, switching the display of the second comment panel to the first comment panel, and re-displaying the target interaction object; and/or, in response to a comment input operation acting within the second comment panel, maintaining the display of the second comment panel and re-displaying the target interaction object for the current user to input the second comment information for the target media content into the second comment input area of the second comment panel and publish the second comment information.

The second panel switching operation may be a trigger operation for instructing to switch the display of the second comment panel to the first comment panel, such as an operation of triggering the panel switching control displayed in the second comment panel, etc. The comment input operation may be a trigger operation for instructing to display the target interaction object to input comment information in the second comment panel, such as a trigger operation (e.g., a click operation) acting on the comment input area displayed in the second comment panel, etc. The second comment input area may be an area included in the second comment panel for the current user to comment on the target media content. The second comment information may be comment information input by the current user in the second comment input area.

Exemplarily, when the second panel switching operation is received, the display of the second comment panel 60 for the target media content may be canceled, and the first comment panel 30 and the target interaction object 31 (e.g., a virtual keyboard) of the target media content may be re-displayed, so that the user may directly input comment information he desires to comment in the first comment input area 32 of the first comment panel 30 through the target interaction object 31, and may publish his comment information input in the first comment input area 32 by performing a comment publishing operation after the input is completed.

When the comment input operation acting within the second comment panel 60 is received, e.g., when it is detected that the user clicks the second comment input area 61 in the second comment panel 60, the target interaction object 31 (e.g., the virtual keyboard) may be displayed, e.g., the display of the second comment panel 60 is maintained and the target interaction object 31 is additionally displayed. In this way, the current user may input comment information that he desires to comment into the second comment input area 61 of the second comment panel 60 through the target interaction object 31, and may publish his comment information input in the first comment input area by performing a corresponding comment publishing operation after the input is completed.

The present embodiment provides a comment information publishing method, which may satisfy the user's need to view comment information about the currently-viewed media content, simplify an operation needed by the user to switch from the first comment panel to the second comment panel, and improve the simplicity of the media content display page.

FIG. 7 is a block diagram of a comment information publishing apparatus according to an embodiment of the present disclosure. The apparatus may be implemented by software and/or hardware, and configured in an electronic device such as a mobile phone or a tablet computer, and may quickly publish the comment information about the media content by performing the comment information publishing method. As shown in FIG. 7, the comment information publishing apparatus according to the present embodiment may comprise: a content displaying module 701, a first panel displaying module 702 and a comment publishing module 702, wherein the content displaying module 701 is configured to display, in a media content display page, target media content and a comment control corresponding to the target media content, wherein the comment control is configured to trigger and display published comment information for the target media content; the first panel displaying module 702 is configured to, in response to a first trigger operation on the comment control, display a first comment panel and a target interaction object for the target media content, wherein the first comment panel includes a first comment input area, and the target interaction object is configured to input first comment information for the target media content in the first comment input area; the comment publishing module 708 is configured to, in response to a comment publishing operation, publish the first comment information in the first comment input area.

In the comment information publishing apparatus according to the present embodiment, the target media content and the comment control corresponding to the target media content are displayed in the media content display page via the content displaying module, wherein the comment control is configured to trigger the display of published comment information for the target media content; the first comment panel and the target interaction object for the target media content are displayed in response to a first trigger operation on the comment control via the first panel displaying module, wherein the first comment panel contains a first comment input area, and the target interaction object is configured to input first comment information for the target media content in the first comment input area; the first comment information in the first comment input area is published in response to the comment publishing operation via the comment publishing module. According to the above technical solution in the present embodiment, when the first trigger operation on the comment control is received, the first comment panel and target interaction object are displayed so that the user may comment on the media content only by one trigger operation. The present embodiment can simplify an operation needed by the user to comment on the media content, improve the simplicity of the media content display page, and improve the user's experience.

In the above solution, the first comment panel may be further displayed with at least one piece of candidate comment information, and the comment information publishing apparatus according to the present embodiment may further comprise: a comment input module configured to, in response to a second trigger operation on any candidate comment information displayed in the first comment panel, input candidate comment information triggered by the second trigger operation into the first comment input area.

In the above-solution, the first comment panel may be further displayed with target published comment information for the target media content, or the first comment panel may be further displayed with a comment display control, and the comment display control is configured to trigger additional display of the target published comment information for the target media content in the first comment panel.

In the above solution, the comment publishing module 702 may be configured to: in response to existence of the target published comment information in a selected state, publish the first comment information by taking the first comment information input in the first comment input area as sub-comment information of the target published comment information, wherein the target published comment information is the published comment information in the selected state.

The comment information publishing apparatus according to the present embodiment may further comprise: a first switching module configured to, in response to a first panel switching operation acting within the first comment panel, switch the display of the first comment panel to a second comment panel and cancel the display of the target interaction object, wherein the second comment panel is configured to display the published comment information for the target media content.

The comment information publishing apparatus according to the present embodiment may further comprise: a second panel displaying module configured to, in response to a third trigger operation on the comment control, display the second comment panel for the target media content, wherein the second comment panel is configured to display the published comment information for the target media content.

The comment information publishing apparatus according to the present embodiment may further comprise: a second switching module configured to, in response to a second panel switching operation acting within the second comment panel, switch the display of the second comment panel to the first comment panel, and re-display the target interaction object; and/or, an object displaying module configured to, in response to a comment input operation acting within the second comment panel, maintain the display of the second comment panel and re-display the target interaction object for a current user to input the second comment information for the target media content in the second comment input area of the second comment panel and publish the second comment information.

The comment information publishing apparatus according to an embodiment of the present disclosure may execute the comment information publishing method according to any embodiments of the present disclosure, and has corresponding functional modules for implementing the comment information publishing method. Reference may be made to the comment information publishing method according to any embodiment of the present disclosure for technical details not described in the present embodiment.

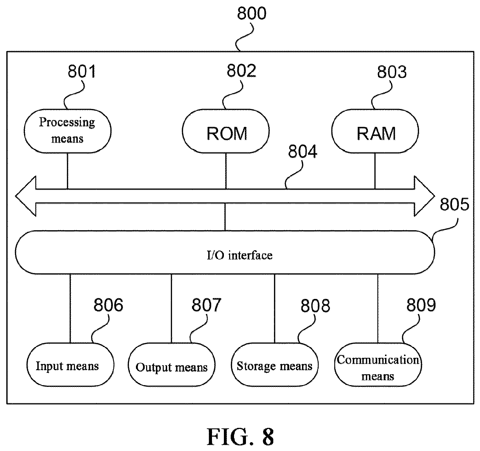

Referring to FIG. 8 hereunder, FIG. 8 is a block diagram of an electronic device (e.g., a terminal device) 800 adapted to implement an embodiment of the present disclosure. The terminal device in the embodiments of the present disclosure may comprise, but not limited to, mobile terminals such as mobile phones, notebook computers, digital broadcast receivers, Personal Digital Assistants (PDAs), Tablet Computers (Portable Android Devices, PADs), Portable Multimedia Players (PMPs), in-vehicle terminals (e.g., in-vehicle navigation terminals), etc. and fixed terminals such as digital TVs, desktop computers, etc. The electronic device shown in FIG. 8 is merely an example and should not impose any limitations on the functionality and scope of use of embodiments of the present disclosure.

As shown in FIG. 8, the electronic device 800 may comprise a processing means (e.g., a central processing unit, a graph processor, etc.) 801 that may perform various suitable acts and processes in accordance with a program stored in a Read Only Memory (ROM) 802 or a program loaded from a storage means 808 into a Random Access Memory (RAM) 803. In the RAM 803, various programs and data needed by the operation of the electronic device 800 are also stored. The processing means 801, the ROM 802, and the RAM 803 are connected to one another via a bus 804. An input/output (I/O) interface 805 is also coupled to bus 804.

In general, the following devices may be connected to the I/O interface 805: an input means 806 including, for example, a touch screen, a touch pad, a keyboard, a mouse, a camera, a microphone, an accelerometer, a gyroscope, etc.; an output means 807 including, for example, a Liquid Crystal Display (LCD), a speaker, a vibrator, etc.; a storage means 808 including, for example, a magnetic tape, a hard disk, etc.; and a communication means 809. The communication means 809 may allow the electronic device 800 to communicate in a wireless or wired manner with other devices to exchange data. While FIG. 8 illustrates the electronic device 800 having various devices, it is to be understood that not all illustrated device are required to be implemented or provided. More or fewer devices may alternatively be implemented or provided.

According to embodiments of the present disclosure, the processes described above with reference to flow charts may be implemented as computer software programs. For example, embodiments of the present disclosure comprise a computer program product comprising a computer program carried on a non-transitory computer-readable medium, the computer program comprising program code for performing the method illustrated by the flow charts, thereby implementing the above interaction method. In such embodiments, the computer program may be downloaded and installed from a network via the communication means 809, or installed from the storage means 808, or installed from the ROM 802. When the computer program is executed by the processing means 801, the above-described functions defined in the method of the embodiment of the present disclosure are performed.

It is appreciated that the computer-readable medium described above in the present disclosure may be either a computer-readable signal medium or a computer-readable storage medium, or any combination of the two. The computer-readable storage medium may be, for example but not limited to, an electronic, magnetic, optical, electromagnetic, infrared, or semiconductor system, apparatus, or device, or a combination of any of the above. More specific examples of the computer-readable storage medium may comprise, but are not limited to: an electrical connection having one or more wires, a portable computer magnetic disk, a hard disk, a random access memory (RAM), a read-only memory (ROM), an erasable programmable read-only memory (EPROM or Flash memory), an optical fiber, a portable compact disk read-only memory (CD-ROM), an optical storage means, a magnetic storage means, or any suitable combination of the above. In the present disclosure, the computer-readable storage medium may be any tangible medium that contains or stores a program that may be used by or in conjunction with an instruction execution system, apparatus, or device. In the present disclosure, the computer-readable signal medium may comprise an information signal embodied in baseband or propagated as part of a carrier carrying computer-readable program code. Such propagated information signals may take many forms, including but not limited to, electromagnetic signals, optical signals, or any suitable combinations thereof. The computer-readable signal medium may also be any computer-readable medium other than a computer-readable storage medium that may send, propagate, or transport the program for use by or for use in conjunction with the instruction execution system, apparatus, or device. The program code contained on the computer-readable medium may be transmitted with any suitable medium including, but not limited to: electrical wire, optic cable, RF (radio frequency), and the like, or any suitable combinations thereof.

In some embodiments, the client and server may communicate using any currently known or future-developed network protocol, such as HTTP (HyperText Transfer Protocol), and may be interconnected with any form or medium of digital data communication (e.g., a communication network). Examples of the communication network comprise Local Area Networks ("LANs"), Wide Area Networks ("WANs"), the Interne, and peer-to-peer networks (e.g., ad hoc peer-to-peer networks), as well as any currently known or future-developed networks.

The computer readable medium may be contained in the above-described electronic device; it may also be present separately and not installed into the electronic device.

The computer-readable medium carries one or more programs that, when executed by the electronic device, cause the electronic device to perform the following acts: displaying, in a media content display page, target media content and a comment control corresponding to the target media content, wherein the comment control is configured to trigger and display published comment information for the target media content; in response to a first trigger operation on the comment control, displaying a first comment panel and a target interaction object for the target media content, wherein the first comment panel includes a first comment input area, and the target interaction object is configured to input first comment information for the target media content in the first comment input area; and in response to a comment publishing operation, publishing the first comment information in the first comment input area.

The computer program code for carrying out operations of the present disclosure may be written in one or more programming languages or combinations thereof. The programming languages include, but not limited to, object-oriented programming languages, such as Java, smalltalk, C++, and conventional procedural programming languages, such as the "C" language or similar programming languages. The program code may be executed entirely on the user's computer, executed partly on the user's computer, executed as a stand-alone software package, executed partly on the user's computer and partly on a remote computer, or executed entirely on the remote computer or a server. In the case of the remote computer, the remote computer may be connected to the user's computer through any type of network, including a local area network (LAN) or a wide area network (WAN), or it may be connected to an external computer (e.g., connected through the Internet using an Internet service provider).

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, may be implemented by special purpose hardware-based systems that perform the specified functions or acts, or combinations of special purpose hardware and computer instructions.

The units described in connection with the embodiments disclosed herein may be implemented in a software or hardware manner. The names of the units do not constitute limitations of the units themselves in a certain case.

The functions described herein above may be performed, at least in part, by one or more hardware logic constituent elements. For example, without limitation, exemplary types of hardware logic constituent elements that may be used comprise: a Field Programmable Gate Array (FPGA), an Application Specific Integrated Circuits (ASIC), an Application Specific Standard Products (ASSP), a Systems On Chip (SOC), a Complex Programmable Logic Device (CPLD), and so on.

In the context of the present disclosure, the machine-readable medium may be a tangible medium that may contain or store a program for use by or for use in conjunction with an instruction execution system, apparatus, or device. The machine-readable medium may be a machine-readable signal medium or a machine-readable storage medium. The machine-readable medium may comprise, but is not limited to, an electronic, magnetic, optical, electromagnetic, infrared, or semiconductor system, apparatus, or device, or any suitable combinations thereof. More specific examples of the machine-readable storage medium would comprise an electrical connection based on one or more wires, a portable computer diskette, a hard disk, a random access memory (RAM), a read-only memory (ROM), an erasable programmable read-only memory (EPROM or Flash memory), an optical fiber, a compact disc read-only memory (CD-ROM), an optical storage means, a magnetic storage means, or any suitable combination thereof.

According to one or more embodiments of the present disclosure, Example 1 provides a comment information publishing method, comprising: displaying, in a media content display page, target media content and a comment control corresponding to the target media content, wherein the comment control is configured to trigger and display published comment information for the target media content; in response to a first trigger operation on the comment control, displaying a first comment panel and a target interaction object for the target media content, wherein the first comment panel includes a first comment input area, and the target interaction object is configured to input first comment information for the target media content in the first comment input area; and in response to a comment publishing operation, publishing the first comment information in the first comment input area.

According to one or more embodiments of the present disclosure, Example 2 further defines the method of Example 1, wherein the first comment panel is further displayed with at least one piece of candidate comment information, and the method further comprises: in response to a second trigger operation on any candidate comment information displayed in the first comment panel, inputting candidate comment information triggered by the second trigger operation into the first comment input area.

According to one or more embodiments of the present disclosure, Example 3 further defines the method of Example 1, wherein the first comment panel is further displayed with target published comment information for the target media content, or the first comment panel is further displayed with a comment display control, and the comment display control is configured to trigger additional display of the target published comment information for the target media content in the first comment panel.

According to one or more embodiments of the present disclosure, Example 4 further defines the method of Example 3, wherein the publishing the first comment information input in the first comment input area comprises: in response to existence of the target published comment information in a selected state, publishing the first comment information by taking the first comment information input in the first comment input area as sub-comment information of the target published comment information, wherein the target published comment information is the published comment information in the selected state.

According to one or more embodiments of the present disclosure, Example 5 further defines the method of Example 1, wherein the method further comprises: in response to a first panel switching operation acting within the first comment panel, switching the display of the first comment panel to a second comment panel and cancelling the display of the target interaction object, wherein the second comment panel is configured to display the published comment information for the target media content.

According to one or more embodiments of the present disclosure, Example 6 further defines the method of Example 1, wherein the method further comprises: in response to a third trigger operation on the comment control, displaying the second comment panel for the target media content, wherein the second comment panel is configured to display the published comment information for the target media content.

According to one or more embodiments of the present disclosure, Example 7 further defines the method of Example 5 or 6, wherein the method further comprises: in response to a second panel switching operation acting within the second comment panel, switching the display of the second comment panel to the first comment panel, and re-displaying the target interaction object; and/or in response to a comment input operation acting within the second comment panel, maintaining the display of the second comment panel and re-displaying the target interaction object for a current user to input the second comment information for the target media content in the second comment input area of the second comment panel and publish the second comment information..

According to one or more embodiments of the present disclosure, Example 8 provides a comment information publishing apparatus, comprising: a content displaying module configured to display, in a media content display page, target media content and a comment control corresponding to the target media content, wherein the comment control is configured to trigger and display published comment information for the target media content; a first panel displaying module configured to, in response to a first trigger operation on the comment control, display a first comment panel and a target interaction object for the target media content, wherein the first comment panel includes a first comment input area, and the target interaction object is configured to input first comment information for the target media content in the first comment input area; a comment publishing module configured to, in response to a comment publishing operation, publish the first comment information in the first comment input area.

According to one or more embodiments of the present disclosure, Example 9 provides an electronic device comprising: one or more processors; a memory configured to store one or more programs that, when executed by the one or more processors, cause the one or more processors to implement the comment information publishing method as described in any of Examples 1-7.

According to one or more embodiments of the present disclosure, Example 10 provides a computer-readable storage medium having stored thereon a computer program that, when executed by a processor, implements the comment information publishing method as described in any of Examples 1-7.

The foregoing description is only illustrative of embodiments of the present disclosure and of the principles of the technology employed. It will be appreciated by those skilled in the art that the scope of the present disclosure is not limited to technical solutions formed by specific combinations of the above technical features, and meanwhile covers other technical solutions formed by any combinations of the above technical features or other equivalent features, for example, technical solutions formed by mutual replacement of the above features and technical features having similar functions disclosed in (not limited to) the present disclosure, without departing from the concept disclosed above.

In addition, while operations are depicted in a particular order, this should not be understood as requiring that such operations are performed in the particular order shown or in sequential order. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular implementations. Certain features that are described in the context of separate implementations may also be implemented in combination in a single implementation. Rather, various features described in the context of a single implementation may also be implemented in multiple implementations separately or in any suitable sub-combination.

## Claims

1. A comment information publishing method, comprising:
displaying, in a media content display page, target media content and a comment control corresponding to the target media content, wherein the comment control is configured to trigger and display published comment information for the target media content;
in response to a first trigger operation on the comment control, displaying a first comment panel and a target interaction object for the target media content, wherein the first comment panel includes a first comment input area, and the target interaction object is configured to input first comment information for the target media content in the first comment input area; and
in response to a comment publishing operation, publishing the first comment information in the first comment input area.

2. The method according to claim 1, wherein the first comment panel is further displayed with at least one piece of candidate comment information, and the method further comprises:
in response to a second trigger operation on any candidate comment information displayed in the first comment panel, inputting candidate comment information triggered by the second trigger operation into the first comment input area.

3. The method according to claim 1, wherein the first comment panel is further displayed with target published comment information for the target media content, or
the first comment panel is further displayed with a comment display control, and the comment display control is configured to trigger additional display of the target published comment information for the target media content in the first comment panel.

4. The method according to claim 3, wherein publishing the first comment information input in the first comment input area comprises:
in response to existence of the target published comment information in a selected state, publishing the first comment information by taking the first comment information input in the first comment input area as sub-comment information of the target published comment information, wherein the target published comment information is the published comment information in the selected state.

5. The method according to claim 1, further comprising:
in response to a first panel switching operation acting within the first comment panel, switching the display of the first comment panel to a second comment panel and cancelling the display of the target interaction object, wherein the second comment panel is configured to display the published comment information for the target media content.

6. The method according to claim 1, further comprising:
in response to a third trigger operation on the comment control, displaying the second comment panel for the target media content, wherein the second comment panel is configured to display the published comment information for the target media content.

7. The method according to claim 5 or 6, further comprising at least one of:
in response to a second panel switching operation acting within the second comment panel, switching the display of the second comment panel to the first comment panel, and re-displaying the target interaction object; or
in response to a comment input operation acting within the second comment panel, maintaining the display of the second comment panel and re-displaying the target interaction object for a current user to input the second comment information for the target media content in the second comment input area of the second comment panel and publish the second comment information.

8. A comment information publishing apparatus, comprising:
a content displaying module configured to display, in a media content display page, target media content and a comment control corresponding to the target media content, wherein the comment control is configured to trigger and display published comment information for the target media content;
a first panel displaying module configured to, in response to a first trigger operation on the comment control, display a first comment panel and a target interaction object for the target media content, wherein the first comment panel includes a first comment input area, and the target interaction object is configured to input first comment information for the target media content in the first comment input area;
a comment publishing module configured to, in response to a comment publishing operation, publish the first comment information in the first comment input area.

9. An electronic device, comprising:
at least one processor; and
a memory communicatively coupled to the at least one processor; wherein
the memory stores a computer program executable by the at least one processor, the computer program being executed by the at least one processor to cause the at least one processor to implement the comment information publishing method of any of claims 1-7.

10. A computer-readable storage medium storing computer instructions which, when executed, cause a processor to implement the comment information publishing method of any of claims 1-7.
